# EUROPÄISCHE PATENTSCHRIFT

(11) **EP 1 852 200 B1**
(45) Veröffentlichungstag und Bekanntmachung des Hinweises auf die Patenterteilung: **02.11.2011**
(21) Anmeldenummer: 07008590.7
(22) Anmeldetag: 27.04.2007
(51) Int. Cl.: B23B 27/14

(54) **Schneideinsatz zur spanabhebenden Bearbeitung**
Cutting insert for chip removing machining
Plaquette de coupe pour usinage par enlèvement de copeaux

(30) Priorität: 03.05.2006 AT 3602006
(43) Veröffentlichungstag der Anmeldung: 07.11.2007
(73) Patentinhaber: CERATIZIT Austria Gesellschaft m.b.H., 6600 Reutte /Tirol (AT)
(72) Erfinder: Hofegger, Alfred, 6600 Pflach (AT); Urschitz, Harald, 6600 Breitenwang (AT)

(56) Entgegenhaltungen:
- EP-A- 0 582 981
- EP-B- 0 699 119
- DE-A1- 19 523 126
- US-A- 5 876 154

## Beschreibung

Die Erfindung betrifft einen Schneideinsatz zur spanabhebenden Bearbeitung mit mindestens einer Schneidecke, welche von zwei gerade zusammenlaufenden Schneidkanten gebildet wird, die durch einen kreisförmigen Abschnitt miteinander verbunden sind, wobei die Schneidkanten durch die Verschneidung einer Spanfläche mit einer Freifläche gebildet werden, wobei darüber hinaus die Schneidkanten im Bereich der Schneidecke in der Ebene der zugehörigen Freifläche mit einer muldenförmigen Absenkung verlaufen und wobei die unmittelbar oder über eine Schneidkantenfase an die Schneidkanten anschließende Spanfläche, senkrecht zu den zugehörigen Schneidkantenabschnitten gesehen, zunächst abfällt, wobei die muldenförmige Absenkung unmittelbar am Schnittpunkt der Winkelhalbierenden der Schneidecke mit dem kreisförmigen Abschnitt beginnt und wobei entlang der Winkelhalbierenden ein vom Schnittpunkt beabstandeter, gegenüber den umliegenden Spanflächenabschnitten vertiefter Spanflächenbereich angeordnet ist..

Ein derartiger Schneideinsatz ist beispielsweise in der DE 195 23 126 A1 beschrieben. Nachteilig bei diesem Schneideinsatz ist, dass die Spanbildung beim Kopierdrehen nicht optimal ist.

Die DE 26 15 589 C2beschreibt einen ähnlichen Schneideinsatz. Bei diesem Schneideinsatz verläuft die Absenkung der Schneidkanten in der Ebene der zugehörigen Freifläche jeweils zumindest über die halbe Schneidkantenlänge. Darüber hinaus beginnt die Absenkung der Schneidkante nicht unmittelbar an der Winkelhalbierenden der Schneidecken, sondern erst außerhalb des kreisförmigen Abschnittes der Schneidecke, der die zusammen laufenden Schneidkanten miteinander verbindet. Insbesondere beim Kopierdrehen von Werkstücken aus Stahl, wird bei kleineren Schnitttiefen ein ungenügender Spanbruch erreicht, wodurch es zu langen Spiralen und Wirrspänen kommt, welche unerwünscht sind, da sie eine sichere Zerspanung und gute Oberflächenqualität des abzuspanenden Werkstückes gefährden.

In der EP 1 272 304 B1 wird ein Schneideinsatz zur spanabhebenden Bearbeitung beschrieben der eine abgerundete Schneidecke mit einem mittleren Bereich mit einem ersten Krümmungsradius und sich jeweils seitlich daran anschließenden zweiten Bereichen mit einem größeren Krümmungsradius aufweist. Die Schneidkanten sind im Wesentlichen nur im abgerundeten Schneidenbereich mit dem größeren Krümmungsradius in der Ebene der zugehörigen Freifläche über einen Teilbereich abgesenkt.

Die Absenkung ist also auch hier von dem durch die Winkelhalbierende der Schneidecke bestimmten Schneideckenmittelpunkt beabstandet. Mit einer derartigen Ausgestaltung der Schneidkanten wird erreicht, dass bei einer negativen Einbaulage eines solchen Schneideinsatzes im Werkzeughalter eine Abflachung der Schneidkante erreicht wird, was zu einer Verringerung der Schnittkraft führt und insbesondere eine hervorragende Oberflächenqualität der abgespanten Werkstückoberfläche auch bei hohen Vorschüben bei Plan- und Längs-Dreh-Operationen bewirkt. Die Probleme der schlechten Spanbildung wie sie beim Kopierdrehen auftreten, können jedoch auch durch einen derartigen Schneideinsatz nicht in befriedigendem Ausmaß beseitigt werden.

Die Aufgabe der vorliegenden Erfindung ist es daher einen Schneideinsatz zu schaffen, der insbesondere hervorragend zum Kopierdrehen geeignet ist und nachteilige Spanbildungen bei dieser Bearbeitung mit großer Sicherheit vermeidet.

Erfindungsgemäß wird dies dadurch erreicht, dass die muldenförmige Absenkung einen tiefsten Punkt mit einem Abstand A₁ vom theoretischen Schnittpunkt der Schneidkanten aufweist, der maximal dem 2-fachen Radius R des kreisförmigen Abschnittes entspricht und dass das Ende der muldenförmigen Absenkung einen Abstand _{A2} vom theoretischen Schnittpunkt aufweist, der maximal dem 4-fachen Radius R des kreisförmigen Abschnittes entspricht.

Durch diese spezielle Ausgestaltung des Schneideinsatze innerhalb der festgelegten Grenzwerte wird eine optimale Spanbildung mit hervorragenden Zerspannungsergebnissen beim Kopierdrehen erreicht. Da die Schneidkanten praktisch nur im Bereich der muldenförmigen Absenkung zum Einsatz kommen, ist es nicht von Bedeutung, wie die Schneidkanten nach dem Ende der Absenkung weiter verlaufen. In der Regel werden die Schneidkanten ab diesem Punkt waagrecht verlaufen, aber ebenso ist es denkbar, dass die Schneidkanten ab diesem Punkt wieder abfallen oder mit geringerer Neigung weiter ansteigend verlaufen.

Für die Position des vertieften Spanflächenbereiches ist es von Vorteil, wenn sein Beginn einen Abstand A₄ vom Schnittpunkt der Winkelhalbierenden mit dem kreisförmigen Abschnitt aufweist, der mindestens dem 0,1-fachen und maximal dem 0,5-fachen Radius R des kreisförmigen Abschnittes entspricht.

In einer weiteren vorteilhaften Ausgestaltung der Erfindung bildet die Spanfläche entlang der Winkelhalbierenden vom Schnittpunkt der Winkelhalbierenden mit dem kreisförmigen Abschnitt bis zum Beginn des vertieften Spanflächenbereiches eine gegenüber den benachbarten Spanflächenabschnitten erhabene Verschneidung, wobei es insbesondere von Vorteil ist, wenn die Verschneidung mit einem Kreisbogenabschnitt verrundet ist.

Wichtig für die gute Spanbildung ist es auch, dass die Tiefe der muldenförmigen Absenkung im Verhältnis zum Radius des kreisförmigen Abschnittes der Schneidecke innerhalb eines bestimmten Bereiches festgelegt ist. Als besonders zweckmäßig hat sich dabei herausgestellt, wenn dieser Tiefenbereich zwischen dem 0,2-fachen und 0,5-fachen vom Radius des kreisförmigen Abschnittes der Schneidecke liegt.

Eine äußerst vorteilhafte Verbesserung in der Spanbildung wird auch noch dadurch erreicht, wenn im Bereich der Spanfläche symmetrisch entlang der Winkelhalbierenden anschließend an den vertieften Spanflächenbereich eine flächenförmige Erhöhung gegenüber den benachbarten Spanflächenabschnitten angeordnet ist, welche einen Abstand A₃ vom Schnittpunkt der Winkelhalbierenden mit dem kreisförmigen Abstand aufweist, der im Bereich vom 0,4-fachen bis zum 1-fachen Radius des kreisförmigen Abschnittes liegt und deren Niveau im Wesentlichen über dem tiefsten Punkt der muldenförmigen Absenkung liegt. Dadurch läuft der Span speziell beim Längsdrehen mit kleinen Schnitttiefen auf dieser Erhöhung auf und wird dadurch wirksam geformt und gebrochen.

Besonders bewährt hat es sich, die muldenförmige Absenkung als zusammengesetzte Kurve mit geraden und gekrümmten Abschnitten auszuführen.

Als zweckmäßig hat es sich auch herausgestellt, wenn die unmittelbar oder über eine Schneidkantenfase an die Schneidkanten angrenzende, zunächst abfallende Spanfläche im weiteren Verlauf ansteigt bis zu einer ebenen, zentralen Fläche des Schneideinsatzes, deren Niveau oberhalb des höchsten Punktes der Schneidkanten liegt.
Auf diese Weise wird es ermöglicht, dass der Schneideinsatz nicht nur verdrehbar, sondern auch doppelseitig verwendbar ausgeführt werden kann, so dass eine maximale Anzahl an Schneidkanten zur Zerspanung zur Verfügung steht.

Als besonders vorteilhaft hat es sich bewährt, den Schneideinsatz mit einer im Wesentlichen polygonalen Sechseckform mit drei stumpfen und drei spitzen Ecken auf jeder Seite auszuführen, wobei die spitzen Ecken als Schneidecken ausgeführt sind. Eine derartige Form des Schneideinsatzes ist besonders stabil und kann bei doppelseitiger Ausführung in sechs unterschiedlichen Positionen mit neuen Schneidkanten zum Einsatz gebracht werden.

Im Folgenden wird die Erfindung an Hand von Figuren näher erläutert.

Es zeigen:
- Figur 1: einen erfindungsgemäßen Schneideinsatz in Schrägansicht
- Figur 2: den vergrößerten Ausschnitt der Schneidecke des Schneideinsatzes nach Fig. 1
- Figur 3: den Schneideinsatz nach Fig. 1 in Draufsicht
- Figur 4: den Schneideinsatz nach Fig. 1 in Seitenansicht

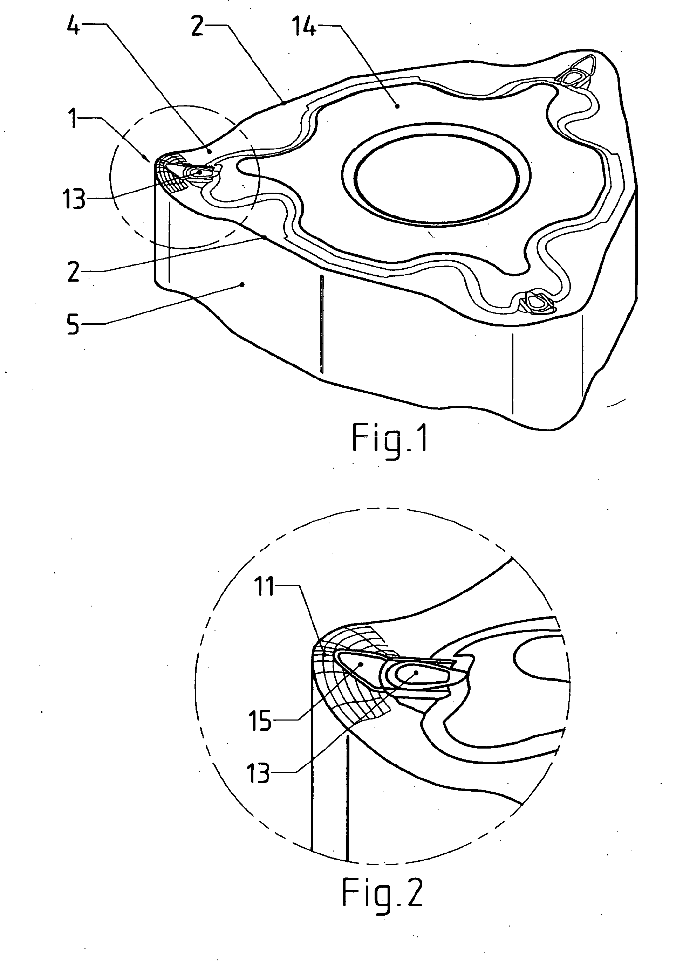

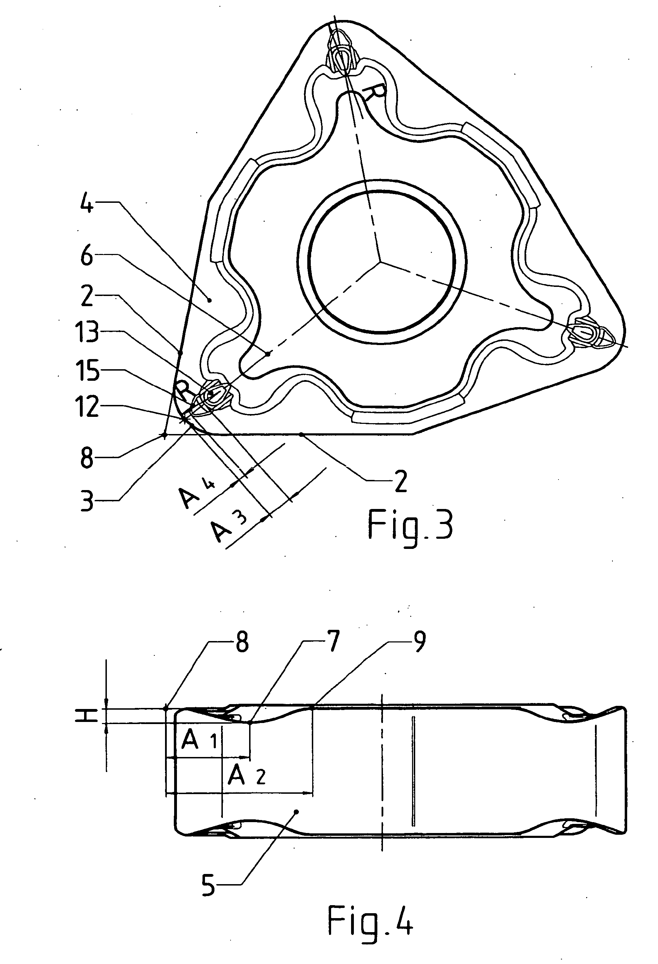

In den Figuren 1 bis 4 ist ein erfindungsgemäßer Schneideinsatz zum Kopierdrehen dargestellt. Der Schneideinsatz weist im Wesentlichen Sechseckform mit drei spitzwinkeligen und drei stumpfwinkeligen Ecken auf jeder Seite auf. Die spitzwinkeligen Ecken sind jeweils als Schneidecken -1- ausgeführt, so dass durch Drehen und Wenden des Schneideinsatzes im Plattensitz eines Drehwerkzeuges insgesamt sechs Schneidecken -1- zum Einsatz gebracht werden können. Jede Schneidecke -1- wird von zwei, in Draufsicht nach Figur 3 gesehen, gerade zusammen laufenden Schneidkanten -2- gebildet, welche durch einen kreisförmigen Abschnitt -3- miteinander verbunden sind. Die gedachten Verlängerungen der geraden Schneidkanten -2- schneiden sich im theoretischen Schnittpunkt -8-. Wenn man den Schneideinsatz in Seitenansicht nach Figur 4 betrachtet, verläuft jede Schneidkante -2- in der Ebene der zugehörigen Freifläche -5- von einem bestimmten Ausgangsniveau ausgehend, das unmittelbar am Schnittpunkt -12- der Winkelhalbierenden -6- der zugehörigen Schneidecke -1- mit dem kreisförmigen Abschnitt -3- liegt, zunächst als zusammengesetzte Kurve mit geraden und gekrümmten Abschnitten abfallend bis zu einem tiefsten Punkt -7-. Dieser tiefste Punkt -7- liegt in einem ganz definierten Abstand A₁ vom theoretischen Schnittpunkt -8- der Schneidkanten -2- der abhängig von der Größe des Radius R des kreisförmigen Abschnittes -3- ist. Beim dargestellten Schneideinsatz entspricht der Abstand A₁ etwa dem 1,8-fachen Radius R. Von diesem tiefsten Punkt -7- weg verläuft jede Schneidkante -2- mit der gleichen Kurvenform ansteigend bis zu einem Punkt -9-, der auf der gleichen Höhe wie das Ausgangsniveau der Schneidkante -2- liegt. Auch dieser Punkt -9- liegt in einem definierten Abstand A₂ vom theoretischen Schnittpunkt -8- der Schneidkanten -2- der im konkreten Fall etwa dem 3,6-fachen Radius R des kreisförmigen Abschnittes -3- entspricht. Von diesem Punkt -9- weg verläuft jede Schneidkante -2- waagrecht.
Der tiefste Punkt -7- der muldenförmigen Absenkung weist einen Höhenunterschied H zum Ausgangsniveau auf, der etwa dem 0,3-fachen vom Radius R des kreisförmigen Abschnittes -3- entspricht. Entlang der Winkelhalbierenden -6- verläuft mit einem Abstand A₄ vom Schnittpunkt -12- der Winkelhalbierenden -6- mit dem kreisförmigen Abschnitt -3- ein gegenüber den umliegenden Spanflächenabschnitten vertiefter Spanflächenbereich -15-. Der Abstand A₄ entspricht dabei etwa dem 0,2-fachen Radius R des kreisförmigen Abschnittes -3-. Die unmittelbar an die Schneidkanten -2- angrenzende Spanfläche -4- verläuft zunächst, senkrecht zu den jeweiligen Schneidkantenabschnitten gesehen, abfallend und geht dann in einen bis auf eine zentrale ebene Fläche -14- ansteigenden Bereich über. Die zentrale ebene Fläche -14- ist geringfügig höher ausgeführt als der höchste Punkt der Schneidkanten -2-, so dass eine sichere Auflage des Schneideinsatzes im Plattensitz des Werkzeughalters gewährleistet ist. Entlang der Winkelhalbierenden -6- jeder Schneidecke -1- verschneidet sich die Spanfläche -4- derart, dass eine gegenüber den benachbarten Spanflächenabschnitten erhabene, leicht abgerundete Verschneidung -11- gebildet wird. Dies ist aus der Detailansicht der Schneidecke -1- in Figur 2 zu ersehen. Zusätzlich ist im Bereich der Spanfläche -4- symmetrisch entlang der Winkelhalbierenden -6- nach dem vertieften Spanflächenbereich -15- eine flächenförmige Erhöhung -13- gegenüber den benachbarten Spanflächenabschnitten vorgesehen, die bis in den ansteigenden Bereich der Spanfläche -4- reicht. Der Beginn der flächenförmigen Erhöhung -13- weist einen Abstand A₃ vom Schnittpunkt -12- der Winkelhalbierenden -6- mit dem kreisförmigen Abschnitt - 3- auf, welcher etwa dem 0,5-fachen vom Radius R entspricht. Das Niveau der Erhöhung -13- liegt im Wesentlichen über dem tiefsten Punkt -7- der muldenförmigen Absenkung.

## Patentansprüche

1. Schneideinsatz zur spanabhebenden Bearbeitung mit mindestens einer Schneidecke (1), welche von zwei gerade zusammenlaufenden Schneidkanten (2) gebildet wird, die durch einen kreisförmigen Abschnitt (3) miteinander verbunden sind, wobei die Schneidkanten (2) durch die Verschneidung einer Spanfläche (4) mit einer Freifläche (5) gebildet werden, wobei darüber hinaus die Schneidkanten (2) im Bereich der Schneidecke (1) in der Ebene der zugehörigen Freifläche (5) mit einer muldenförmigen Absenkung verlaufen und wobei die unmittelbar oder über eine Schneidkantenfase an die Schneidkanten (2) anschließende Spanfläche (4), senkrecht zu den zugehörigen Schneidkantenabschnitten gesehen, zunächst abfällt,
wobei die muldenförmige Absenkung unmittelbar am Schnittpunkt (12) der Winkelhalbierenden (6) der Schneidecke (1) mit dem kreisförmigen Abschnitt (3) beginnt, und wobei entlang der Winkelhalbierenden (6) ein vom Schnittpunkt (12) beabstandeter, gegenüber den umliegenden Spanflächenabschnitten vertiefter Spanflächenbereich (15) angeordnet ist,
**dadurch gekennzeichnet,**
**dass** die muldenförmige Absenkung einen tiefsten Punkt (7) mit einem Abstand A₁ vom theoretischen Schnittpunkt (8) der Schneidkanten (2) aufweist, der maximal dem 2-fachen Radius R des kreisförmigen Abschnittes (3) entspricht und dass das Ende (9) der muldenförmige Absenkung einen Abstand A₂ vom theoretischen Schnittpunkt (8) aufweist, der maximal dem 4-fachen Radius R des kreisförmigen Abschnittes (3) entspricht.

2. Schneideinsatz zur spanabhebenden Bearbeitung nach Anspruch 1
**dadurch gekennzeichnet, dass** der Beginn des vertieften Spanflächenbereiches (15) einen Abstand A₄ vom Schnittpunkt (12) der Winkelhalbierenden (6) mit dem kreisförmigen Abschnitt (3) aufweist, der mindestens dem 0,1-fachen und maximal dem 0,5-fachen Radius R des kreisförmigen Abschnittes (3) entspricht.

3. Schneideinsatz zur spanabhebenden Bearbeitung nach Anspruch 1 oder 2, **dadurch gekennzeichnet, dass** die Spanfläche (4) entlang der Winkelhalbierenden (6) vom Schnittpunkt (12) der Winkelhalbierenden (6) mit dem kreisförmigen Abschnitt (3) bis zum Beginn des vertieften Spanflächenbereiches (15) eine gegenüber den benachbarten Spanflächenabschnitten erhabene Verschneidung (11) bildet.

4. Schneideinsatz zur spanabhebenden Bearbeitung nach Anspruch 3, **dadurch gekennzeichnet, dass** die erhabene Verschneidung (11) mit einem Kreisbogenabschnitt verrundet ist.

5. Schneideinsatz zur spanabhebenden Bearbeitung nach einem der Ansprüche 1 bis 4, **dadurch gekennzeichnet, dass** der tiefste Punkt (7) der muldenförmigen Absenkung gegenüber dem Ausgangsniveau am Schnittpunkt (12) einen Höhenunterschied H aufweist, der in einem Bereich zwischen dem 0,2-fachen und 0,5-fachen vom Radius R des kreisförmigen Abschnittes (3) liegt.

6. Schneideinsatz zur spanabhebenden Bearbeitung nach einem der Ansprüche 1 bis 5, **dadurch gekennzeichnet, dass** im Bereich der Spanfläche (4) symmetrisch entlang der Winkelhalbierenden (6) anschließend an den vertieften Spanflächenbereich (15) eine flächenförmige Erhöhung (13) gegenüber den benachbarten Spanflächenabschnitten angeordnet ist, welche einen Abstand A₃ vom Schnittpunkt (12) der Winkelhalbierenden (6) mit dem kreisförmigen Abschnitt (3) aufweiset, der im Bereich vom 0,4-fachen bis zum einfachen Radius R des kreisförmigen Abschnittes (3) liegt und deren Niveau im Wesentlichen über dem tiefsten Punkt (7) der muldenförmigen Absenkung liegt.

7. Schneideinsatz zur spanabhebenden Bearbeitung nach einem der Ansprüche 1 bis 6, **dadurch gekennzeichnet, dass** die muldenförmigen Absenkung als zusammengesetzte Kurve mit geraden und gekrümmten Abschnitten ausgeführt ist.

8. Schneideinsatz zur spanabhebenden Bearbeitung nach einem der Ansprüche 1 bis 7, **dadurch gekennzeichnet, dass** die an die Schneidkanten (2) anschließende, zunächst abfallende Spanfläche (4) im weiteren Verlauf ansteigt, bis zu einer ebenen, zentralen Fläche (14) des Schneideinsatzes, deren Niveau oberhalb des höchsten Punktes der Schneidkanten (2) liegt.

9. Schneideinsatz zur spanabhebenden Bearbeitung nach Anspruch 8, **dadurch gekennzeichnet, dass** der Schneideinsatz doppelseitig verwendbar ausgeführt ist.

10. Schneideinsatz zur spanabhebenden Bearbeitung nach einem der Ansprüche 1 bis 9, **dadurch gekennzeichnet, dass** der Schneideinsatz eine im Wesentlichen polygonale Sechseckform mit drei stumpfen und drei spitzen Ecken aufweist, wobei die spitzen Ecken als Schneidecken (1) ausgeführt sind.

## Claims

1. Cutting insert for machining, having at least one cutting corner (1) formed by two cutting edges (2) which converge in a straight line and are connected to one another by a circular section (3), the cutting edges (2) being formed by the intersection of a rake face (4) with a clearance face (5), the cutting edges (2) furthermore running, in the area of the cutting corner (1) in the plane of the associated clearance face (5), with a trough-shaped depression and the rake face (4), which adjoins the cutting edges (2) directly or via a cutting-edge bevel, at first sloping downwards when viewed perpendicularly to the associated cutting-edge sections, the trough-shaped depression beginning directly at the intersecting point (12) of the bisector (6) of the cutting corner (1) with the circular section (3), and a rake face area (15), which is at a distance from the intersecting point (12) and is recessed with respect to the surrounding rake face sections, being arranged along the bisector (6),
**characterised**
**in that** the trough-shaped depression has a lowest point (7) at a distance A₁ from the theoretical intersecting point (8) of the cutting edges (2) which corresponds at most to 2-times the radius R of the circular section (3), and in that the end (9) of the trough-shaped depression is at a distance A₂ from the theoretical intersecting point (8) which corresponds at most to 4-times the radius R of the circular section (3).

2. Cutting insert for machining according to Claim 1, **characterised in that** the beginning of the recessed rake face area (15) is at a distance A₄ from the intersecting point (12) of the bisector (6) with the circular section (3) which corresponds at least to 0.1-times and at most to 0.5-times the radius R of the circular section (3).

3. Cutting insert for machining according to Claim 1 or 2, **characterised in that** the rake face (4) forms, along the bisector (6) from the intersecting point (12) of the bisector (6) with the circular section (3) as far as the beginning of the recessed rake face area (15), an intersection (11) raised with respect to the neighbouring rake face sections.

4. Cutting insert for machining according to Claim 3, **characterised in that** the raised intersection (11) is rounded with a circular arc section.

5. Cutting insert for machining according to one of Claims 1 to 4, **characterised in that** the lowest point (7) of the trough-shaped depression has a difference in height H with respect to the starting level at the intersecting point (12) which lies in a range between 0.2-times and 0.5-times the radius R of the circular section (3).

6. Cutting insert for machining according to one of Claims 1 to 5, **characterised in that**, in the area of the rake face (4) adjoining the recessed rake face area (15), there is arranged, symmetrically along the bisector (6), a planiform prominence (13) with respect to the neighbouring rake face sections which is at a distance A₃ from the intersecting point (12) of the bisector (6) with the circular section (3) lying in the range from 0.4-times to one-times the radius R of the circular section (3) and the level of which lies substantially above the lowest point (7) of the trough-shaped depression.

7. Cutting insert for machining according to one of Claims 1 to 6, **characterised in that** the trough-shaped depression is designed as a composite curve with straight and curved sections.

8. Cutting insert for machining according to one of Claims 1 to 7, **characterised in that** the rake face (4), which adjoins the cutting edges (2) and at first slopes downwards, in the further course slopes upwards as far as a plane, central surface (14) of the cutting insert, the level of which lies above the highest point of the cutting edges (2).

9. Cutting insert for machining according to Claim 8, **characterised in that** the cutting insert is designed to be usable on both sides.

10. Cutting insert for machining according to one of Claims 1 to 9, **characterised in that** the cutting insert has a substantially polygonal hexagonal shape with three obtuse and three acute corners, the acute corners being designed as cutting corners (1).

## Revendications

1. Plaquette de coupe pour usinage par enlèvement de copeaux comprenant au moins un bec (1) formé par deux arêtes rectilignes concourantes (2) qui sont réunies par une portion circulaire (3),
dans laquelle lesdites arêtes (2) sont formées à l'intersection d'une face d'attaque (4) avec une face de dépouille (5), qu'elles décrivent au niveau du bec (1), un creux, dans le plan de la face de dépouille (5) et que la face d'attaque (4) adjacente aux arêtes (soit directement, soit par l'intermédiaire d'un chanfrein) - vue perpendiculairement aux secteurs correspondants de la face d'attaque - s'incline immédiatement à partir du point d'intersection (12) de la bissectrice (6) du bec (1) avec la portion circulaire (3),
et dans laquelle, en outre, il est agencé, le long de ladite bissectrice (6), une portion de face d'attaque (15) espacée du point d'intersection (12) et évidée par rapport aux autres portions de face d'attaque adjacentes,
**caractérisée par le fait que** le point bas (7) du creux est situé à une distance A₁ du point d'intersection théorique (8) des arêtes (2) égale au maximum à 2 fois le rayon R de la portion circulaire (3), et **par le fait que** l'extrémité finale (9) du creux est située à une distance A₂ du point d'intersection théorique (8) égale au maximum à 4 fois le rayon R de la portion circulaire (3).

2. Plaquette de coupe selon la revendication 1, **caractérisée par le fait que** l'extrémité initiale de la portion de face d'attaque évidée (15) est située à une distance A₄ du point d'intersection (12) de la bissectrice (6) avec la portion circulaire (3) égale au minimum à 0,1 fois et au maximum à 0,5 fois le rayon R de la portion circulaire (3).

3. Plaquette de coupe selon la revendication 1 ou 2, **caractérisée par le fait que** la face d'attaque (4) forme, le long de la bissectrice (6), à partir du point d'intersection (12) de la bissectrice (6) avec la portion circulaire (3) et jusqu'à l'extrémité initiale de la portion de face d'attaque évidée (15), un secteur d'intersection (11) en relief par rapport aux portions de face d'attaque adjacentes.

4. Plaquette de coupe selon la revendication 3, **caractérisée par le fait que** le secteur d'intersection (11) en relief est arrondi par une portion de cercle.

5. Plaquette de coupe selon l'une quelconque des revendications 1 à 4, **caractérisée par le fait que** le point bas (7) du creux présente, par rapport au niveau initial au point d'intersection (12) une différence de hauteur H comprise entre 0,2 fois et 0,5 fois le rayon R de la portion circulaire (3).

6. Plaquette de coupe selon l'une quelconque des revendications 1 à 5, **caractérisée par le fait qu'**il est agencé, au niveau de la face d'attaque (4), symétriquement le long de la bissectrice (6) et adjacente à la portion de face d'attaque évidée (15), une surface (13) en surélévation par rapport aux portions de face d'attaque adjacentes, ladite surface (13) étant située à une distance A₃ du point d'intersection (12) de la bissectrice (6) avec la portion circulaire (3) comprise entre 0,4 fois et 1 fois le rayon R de la portion circulaire (3) et le niveau de ladite surface (13) se situant, pour l'essentiel, au dessus du point bas (7) du creux.

7. Plaquette de coupe selon l'une quelconque des revendications 1 à 6, **caractérisée par le fait que** le creux est configuré en courbe constituée de secteurs droits et de secteurs incurvés.

8. Plaquette de coupe selon l'une quelconque des revendications. 1 à 7, **caractérisée par le fait que** la face d'attaque (4) adjacente aux arêtes (2), qui s'incline d'abord, s'élève ensuite jusqu'à une face centrale plane (14) de la plaquette de coupe, le niveau de ladite face centrale (14) se situant au-dessus du point culminant des arêtes (2).

9. Plaquette de coupe selon la revendication 8, **caractérisée par le fait que** la configuration de la plaquette permet d'utiliser celle-ci dans les deux sens.

10. Plaquette de coupe selon l'une quelconque des revendications 1 à 9, **caractérisée par** sa forme sensiblement hexagonale, avec trois angles obtus et trois angles aigus, les angles aigus étant configurés en becs de coupe (1).
